# EUROPEAN PATENT SPECIFICATION

(11) **EP 4 080 743 B1**
(45) Date of publication and mention of the grant of the patent: **05.03.2025**
(21) Application number: 21743641.9
(22) Date of filing: 05.01.2021
(51) Int. Cl.: H02K 16/02, H02K 49/10, H02K 1/12, H02K 1/17, H02K 7/11, H02K 21/44

(54) **MAGNETIC GEARED ROTARY ELECTRIC MACHINE**
ELEKTRISCHE DREHMASCHINE MIT MAGNETGETRIEBE
MACHINE ÉLECTRIQUE ROTATIVE À ENGRENAGE MAGNÉTIQUE

(30) Priority: 24.01.2020 JP 2020010264
(43) Date of publication of application: 26.10.2022
(73) Proprietor: Mitsubishi Heavy Industries, Ltd., Tokyo 100-8332 (JP)
(72) Inventor: MATSUSHITA, Takatoshi, Tokyo 100-8332 (JP); SASAKI, Mikito, Tokyo 100-8332 (JP)
(74) Representative: Studio Torta S.p.A.
(86) International application number: PCT/JP2021/000081
(87) International publication number: WO 2021/149473

(56) References cited:
- WO-A1-2016/017317
- WO-A1-2017/121986
- CN-A- 104 917 310
- JP-A- 2014 163 431
- JP-A- 2016 135 014
- JP-A- 2016 135 014

## Description

### Technical Field

The present disclosure relates to a magnetic geared rotary electric machine.

Priority is claimed on Japanese Patent Application No. 2020-010264, filed January 24, 2020**.**

### Background Art

Patent Document 1 below discloses a magnetic geared rotary electric machine in which a low-speed rotor (first rotor), a high-speed rotor (second rotor), and a stator are coaxially rotatable relative to each other.

When the magnetic geared rotary electric machine is used as, for example, a motor, the low-speed rotor which is an output shaft rotates at a predetermined reduction ratio due to a harmonic magnetic flux by rotating the high-speed rotor by an electromotive force of a coil provided in the stator.

In the magnetic geared rotary electric machine, the stator includes a stator core and a plurality of stator magnets provided on the inner peripheral side of the stator core. The stator core includes an annular back yoke and teeth protruding radially inward from the back yoke. The stator magnet is disposed on the inner peripheral side of the front end portions of the teeth.

### Citation List

### Patent Document(s)

Patent Document 1: Japanese Unexamined Patent Application, First Publication No. 2014-163431
Patent Document 2: WO2017/121986
Patent Document 3: JP 2016 1350014

### Summary of Invention

### Technical Problem

Here, in the magnetic geared rotary electric machine, it is desirable to easily attach a coil made of a large diameter lead wire to the stator in order to generate a larger torque. Further, it is desired to further reduce a magnetic resistance of the stator with respect to a fundamental wave magnetic flux of the second rotor in order to efficiently operate the magnetic geared rotary electric machine.

The present disclosure has been made to solve the above-described problems and an object thereof is to provide a magnetic geared rotary electric machine capable of easily attaching a coil and reducing a magnetic resistance of a stator with respect to a fundamental wave magnetic flux of a second rotor.

### Solution to Problem

In order to solve the above-described problems, a magnetic geared rotary electric machine according to the present disclosure is defined in claim 1.

### Advantageous Effects of Invention

According to the present disclosure, it is possible to easily attach a coil and to reduce a magnetic resistance of a stator with respect to a fundamental wave magnetic flux of a second rotor.

### Brief Description of Drawings

FIG. 1 is a cross-sectional view showing a configuration of a magnetic geared rotary electric machine according to an embodiment of the present disclosure.
FIG. 2 is a main enlarged view of a stator according to the embodiment of the present disclosure.
FIG. 3 is an explanatory diagram showing a magnetization direction of a stator magnet according to the embodiment of the present disclosure.
FIG. 4 is a main enlarged view showing a modified example of the stator according to the embodiment of the present disclosure.
FIG. 5 is a main enlarged view showing another modified example of the stator according to the embodiment of the present disclosure.
FIG. 6 is a main enlarged view showing another modified example of the stator according to an embodiment outside the scope of the claimed invention.

### Description of Embodiments

### First embodiment

### (Configuration of magnetic geared rotary electric machine)

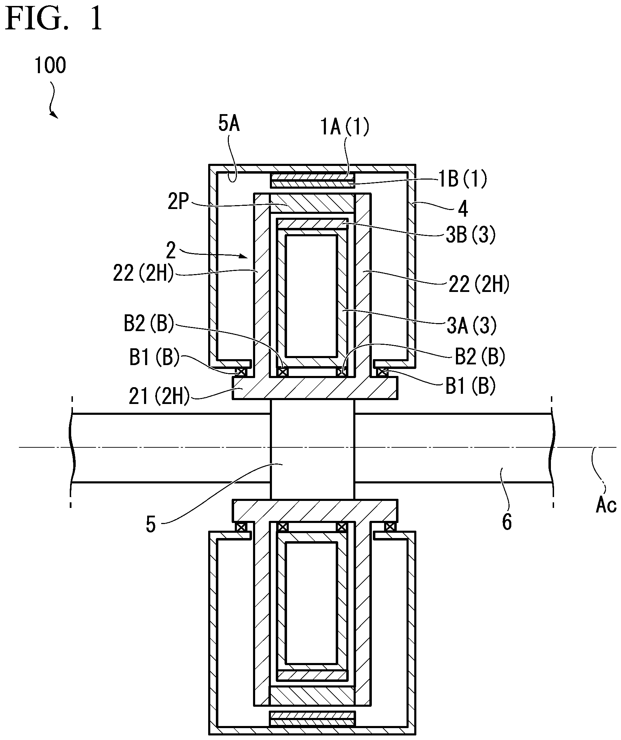

Hereinafter, a magnetic geared rotary electric machine 100 according to a first embodiment of the present disclosure will be described with reference to FIGs. 1 to 4. As shown in FIGs. 1 to 3, the magnetic geared rotary electric machine 100 includes a stator 1, a first rotor 2, a second rotor 3, a casing 4, and a bearing B. The magnetic geared rotary electric machine 100 is attached to a rotating shaft 6 extending in an axis Ac. The magnetic geared rotary electric machine 100 functions as an electric motor by rotating the first rotor 2 and the second rotor 3 around the axis Ac when electric power is supplied from the outside. The magnetic geared rotary electric machine functions as a generator by an induced electromotive force accompanying the rotation of the first rotor 2 and the second rotor 3 when a rotational force (torque) is applied to the rotating shaft 6 from the outside.

### (Configurations of casing and stator)

As shown in FIG. 1, the casing 4 is formed in annular shape centered on the axis Ac. A space is formed inside the casing 4. The stator 1 is provided on a surface (casing inner peripheral surface 5A) facing the inside of the radial direction with respect to the axis Ac in the inner surface of the casing 4.

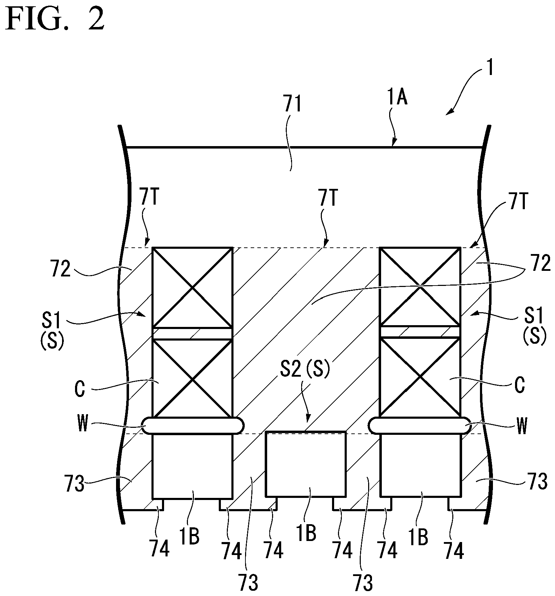

As shown in FIG. 2, the stator 1 includes a stator core 1A, a plurality of coils C, a plurality of stator magnets 1B, and a plurality of wedges W. The stator core 1A includes an annular back yoke 71 which is centered on the axis Ac and a plurality of teeth 7T which protrude radially inward from the back yoke 71 and are arranged at intervals in the circumferential direction.

Each of the teeth 7T (portion indicated by the diagonal line) includes a tooth body 72 which is developed radially inward from the back yoke 71, a pair of tooth grasping portions 73 which is integrally formed with the radially inner end portion of the tooth body 72, and a claw portion 74. The tooth grasping portion 73 projects radially inward from both sides of the tooth body 72 in the circumferential direction. The front end portion (radially inner end portion) of the tooth grasping portion 73 is further provided with the claw portions 74 which are protruded from the tooth grasping portion 73 in the circumferential direction. That is, the claw portions 74 are protruded toward the inside of a slot S.

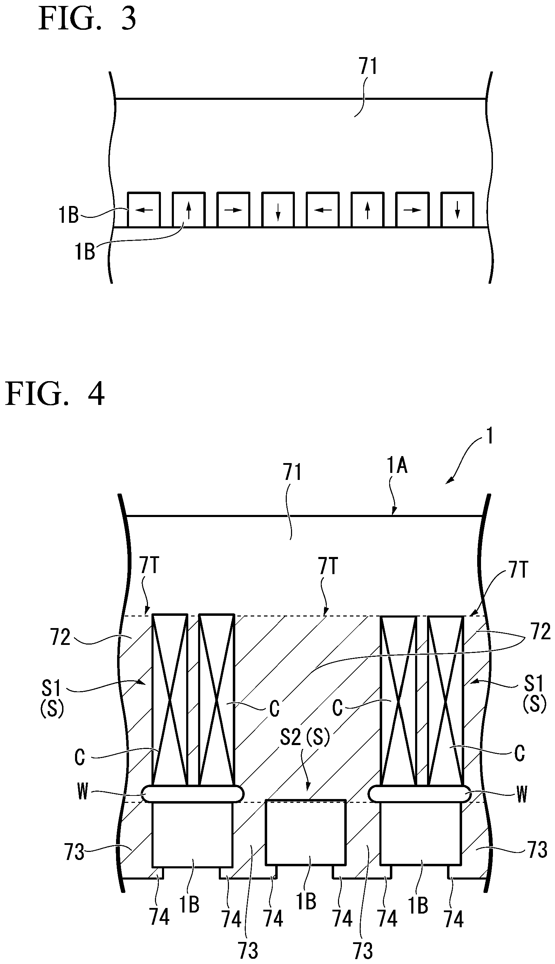

The plurality of coils C are attached to the radially outer portion of a plurality of tooth bodies 72. The coil C is formed by winding a copper wire or the like around the tooth body 72. In this embodiment, the coil C is wound around the tooth body 72 in a mode called distributed winding. In the distributed winding, the coil C is formed by winding a wire over the plurality of teeth 7T. In addition to the distributed winding, the coil C can be formed in a mode called centralized winding shown in FIG. 4. In the centralized winding, each coil C is formed by winding a wire around only one tooth 7T. An area surrounded by the back yoke 71 and the pair of adjacent tooth bodies 72 is the slot S for accommodating the coil C.

As shown in FIG. 2, the stator magnets 1B are arranged in a portion which is a portion (slot S) between the pair of adjacent tooth grasping portions 73 and on the radial inside of the coil C. Each of the stator magnets 1B is supported by the claw portions 74 not to fall off from the outside in the radial direction. That is, the claw portion 74 comes into contact with the inner peripheral surface of the stator magnet 1B. Further, one stator magnet 1B is provided between the tooth grasping portions 73 of the same teeth 7T and between the tooth grasping portions 73 of the adjacent different teeth 7T.

The stator magnet 1B is a permanent magnet such as a ferrite magnet or a neodymium magnet. The poles (magnetization direction) facing the inner peripheral side are different between the stator magnets 1B adjacent to each other. More specifically, these stator magnets 1B are arranged according to the Halbach magnet arrangement. As shown in FIG. 3, in the Halbach magnet arrangement, the magnetization direction changes in order from one side in the circumferential direction to the other side in four clockwise directions. The arrow attached to the stator magnet 1B in FIG. 3 indicates the magnetization direction.

This embodiment includes first slots S1 which each accommodates the coil C and the stator magnet 1B and second slots S2 which each accommodates only the stator magnet 1B. As an example, the first slots S1 and the second slots S2 are arranged in the circumferential direction. Since the dimension (width) of the first slot S1 in the circumferential direction is equal to that of the stator magnet 1B, the coil C and the stator magnet 1B can be provided inside the first slot S1. Accordingly, the molded coil C can be easily attached into the first slot S1. Additionally, it is also possible to adopt a configuration in which the plurality of second slots S2 are provided between the pair of first slots S1.

The wedge W is provided between the coil C and the stator magnet 1B inside the first slot S. The wedge W is a member made of a material having a specific magnetic permeability of 1 or more and is provided for the purpose of insulating between the coil C and the stator magnet 1B and preventing the coil C from falling off. The specific magnetic permeability of the wedge W is preferably 10 or less.

### (Configuration of first rotor)

As shown in FIG. 1, the first rotor 2 is provided inside the stator 1. The first rotor 2 includes a disk portion 5, a first rotor body 2H, and a plurality of pole pieces 2P. The disk portion 5 is formed in a disk shape centered on the axis Ac and is attached to the rotating shaft 6. The first rotor body 2H is attached to the outer peripheral side of the disk portion 5. The first rotor body 2H includes a cylindrical portion 21 which has a cylindrical shape centered on the axis Ac and a pair of support portions 22 which projects radially outward from the outer peripheral surface of the cylindrical portion 21. The cylindrical portion 21 is supported on the inner peripheral surface of the casing 4 through the bearing B (outer bearing B1) to be described later. The plurality of the pole pieces 2P are provided at the radially outer edges of the pair of support portions 22. The pole piece 2P is a magnetic material and generates a harmonic component of magnetic flux by interacting with the magnetic force of the stator magnet 1B and the rotor magnet 3B described later. Although not shown in detail, the plurality of pole pieces 2P are provided at intervals in the circumferential direction of the axis Ac. A non-magnetic member is provided between the pole pieces 2P adjacent to each other to extend in the same direction as the pole pieces 2P.

### (Configuration of second rotor)

As shown in FIG. 1, the second rotor 3 is provided between the pair of support portions 22 of the first rotor body 2H. The second rotor 3 includes a rotor core 3A and a plurality of rotor magnets 3B. The rotor core 3A is formed in an annular shape centered on the axis Ac. The inner peripheral surface of the rotor core 3A is rotatably supported by the outer peripheral surface of the cylindrical portion 21 of the first rotor body 2H through the bearing B (inner bearing B2). The plurality of rotor magnets 3B are arranged on the outer peripheral surface of the rotor core 3A in the circumferential direction. Each of the rotor magnet 3B faces outward in the radial direction with respect to the pole piece 2P.

### (Operation and effect)

Next, an operation of the above-described magnetic geared rotary electric machine 100 will be described. When the magnetic geared rotary electric machine 100 is used as the electric motor, electric power is first supplied to the coil C from the outside. Accordingly, the coil C is excited. The second rotor 3 rotates around the axis Ac by the magnetic force of the coil C. Further, when the second rotor 3 rotates, the first rotor 2 rotates. The rotation speed of the first rotor 2 is decelerated under a reduction ratio based on the number of poles Ph of the first rotor 2 and the number of pole pairs Ns of the second rotor 3. Specifically, the reduction ratio G is G=Ph/Ns.

On the other hand, when the magnetic geared rotary electric machine 100 is used as the generator, a rotational force (torque) around the axis Ac is applied to the rotating shaft 6. Accordingly, the first rotor 2 and the second rotor 3 rotate by the rotation of the rotating shaft 6. An induced electromotive force is generated in the coil C as the first rotor 2 and the second rotor 3 rotate. By taking out this electric power to the outside, the magnetic geared rotary electric machine 100 can be used as the generator.

Here, in this embodiment, the tooth grasping portion 73 is configured to hold the stator magnet 1B on the radial inside of the coil C and on the radial inside of the tooth body 72, respectively.

Since the stator magnet 1B is provided on the radial inside of the coil C, it is possible to increase the opening width of the slot S1 provided with the coil C. Therefore, it is possible to attach even the coil C made of a high voltage lead wire having a large diameter.

Further, since the stator magnet 1B is provided on the radial inside of the tooth body 72, the tooth body 72 having a small magnetic resistance exists as a relatively wide area on the radial outside of the stator magnet 1B. Accordingly, the tooth grasping portion 73 holding the stator magnet 1B can guide the magnetic flux wave component from the second rotor 3 to the tooth body 72 having a small magnetic resistance. As a result, it is possible to largely reduce the magnetic resistance of the teeth 7T as a whole with respect to the fundamental wave magnetic flux of the second rotor 3 and to effectively use the magnetic energy generated by the rotor magnet 3B of the second rotor 3.

Furthermore, according to the above-described configuration, it is possible to more stably hold the stator magnets 1B by the claw portions 74. Further, since the claw portions 74 are provided to be widened from the tooth grasping portion 73, it is possible to reduce the magnetic resistance of the portion of the stator 1 facing the rotor magnet 3B.

Further, according to the above-described configuration, the stator magnets 1B are arranged in a Halbach magnet arrangement. Accordingly, it is possible to strengthen a specific directional component of the magnetic field strength generated by the stator magnet 1B. Thus, it is possible to enhance the magnetic performance of the stator magnet 1B and to improve the torque of the magnetic geared rotary electric machine 100.

In addition, according to the above-described configuration, the wedge W can prevent the coil C from falling off.

### (Other embodiments)

Although the embodiment of the present disclosure has been described in detail with reference to the drawings, the specific configuration is not limited to this embodiment and includes design changes and the like within a range not deviating from the gist of the present disclosure.

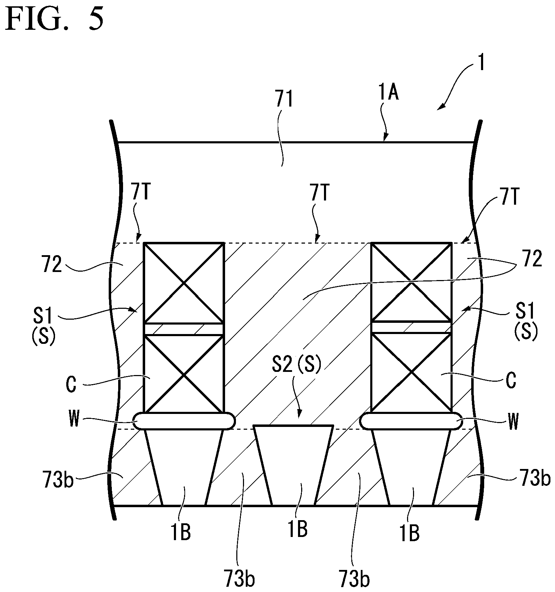

As shown in FIG. 5, the tooth grasping portion 73b may be formed so that the circumferential width dimension of the tooth grasping portion 73b is gradually increased from the radial outside to the radial inside. According to this configuration, since the tooth grasping portion 73b is formed so that the circumferential width dimension of the tooth grasping portion 73b is gradually increased as it forward radially inside, the profile of the teeth gasping portion 73b, when the space (slot S) between the tooth grasping portions 73b and the cross-section orthogonal to the axis Ac of the stator magnet 1B are viewed from the direction of the axis Ac, is a trapezoidal shape (wedge shape) with the radial inside as the upper bottom. Accordingly, it is possible to more stably hold the stator magnet 1B. Further, since it is possible to increase the area of the tooth grasping portion 73b when the cross-section orthogonal to the axis Ac is viewed from the direction of the axis Ac, it is possible to further reduce the magnetic resistance.

Further, since the tooth grasping portion 73b has a wedge shape, the claw portion 74 is not necessary. Therefore, it is possible to reduce the clearance between the stator magnet 1B and the pole piece 2P. Accordingly, it is possible to effectively use the energy of the magnet. Further, since the stator magnet 1B is fitted into the opening portion of the slot S1 in a wedge shape, the stator magnet can have a role as a support member of the coil C. Further, since the tooth grasping portion 73b has a higher strength than that of the claw portion 74, it is possible to more reliably hold the stator magnet 1B.

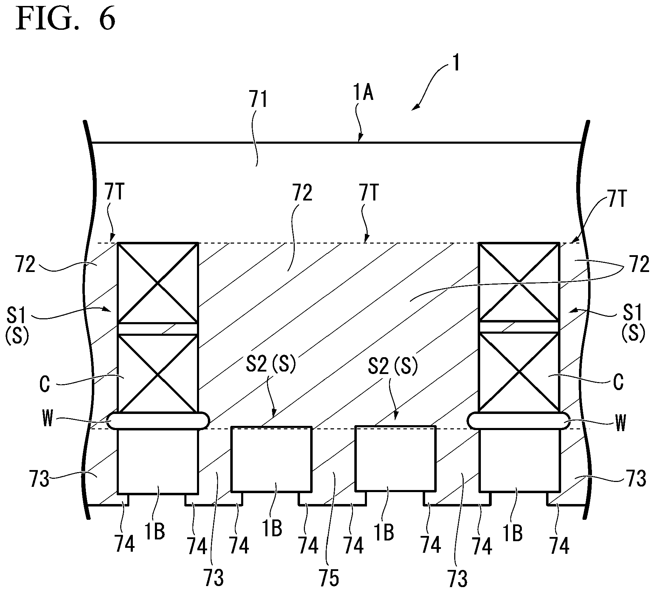

Further, as shown in FIG. 6, a configuration, which is outside the scope of the claimed invention, may be adopted in which another tooth grasping portion 75 protruding radially inward from the tooth body 72 is formed between the pair of tooth grasping portions 73 at both ends of the tooth body 72 in the circumferential direction. Then, the plurality of stator magnets 1B may be provided in the same teeth 7T to be held between the tooth grasping portions 73 and 75 of the same teeth 7T. A plurality of another tooth grasping portions 75 may be provided. Further, the same applies to the case of the wedge-shaped tooth grasping portion 73b.

### Industrial Applicability

The present disclosure relates to a magnetic geared rotary electric machine.

According to the present disclosure, it is possible to easily attach a coil and to reduce a magnetic resistance of a stator with respect to a fundamental wave magnetic flux of a second rotor.

### Reference Signs List

100 Magnetic geared rotary electric machine
1 Stator
1A Stator core
1B Stator magnet
2 First rotor
21 Cylindrical portion
22 Support portion
2H First rotor body
2P Pole piece
3 Second rotor
3A Rotor core
3B Rotor magnet
4 Casing
5 Disk portion
5A Casing inner peripheral surface
6 Rotating shaft
7T Tooth
71 Back yoke
72 Tooth body
73, 73b, 75 Tooth grasping portion
74 Claw portion
Ac Axis
B Bearing
B1 Outer bearing
B2 Inner bearing
C Coil
S Slot
S1 First slot
S2 Second slot
W Wedge

## Claims

1. A magnetic geared rotary electric machine (100) comprising:
a casing (4); a stator including a stator core (1A) fixed to the casing (4) and formed in an annular shape centered on an axis, a coil (C) installed inside a plurality of first slots (S1) of the stator core (1A), and a plurality of stator magnets (1B) installed inside the stator core (1A) at intervals in a circumferential direction about the axis;
a first rotor (2) including a plurality of pole pieces provided radially inside the stator at intervals in the circumferential direction about the axis; and
a second rotor (3) including a rotor core provided radially inside the first rotor and a plurality of rotor magnets (3B) provided in the rotor core at intervals in the circumferential direction,
wherein the stator core (1A) includes a back yoke (71) surrounding the axis and a plurality of teeth formed on the back yoke at intervals in the circumferential direction, each of the plurality of teeth (7T) including a tooth body (72) developing radially inward from the back yoke (71) and a pair of tooth grasping portions (73, 73b) protruding radially from both circumferential ends at a radially inner section of the tooth body,
wherein the coil (C) is installed inside the first slots (S1) formed between the tooth bodies of the teeth adjacent to each other, and
wherein the stator magnets (1B) are installed inside second slots (S2), each second slot (S2) being formed between said pair of tooth grasping portions (73, 73b) of a respective tooth and wherein the stator magnets (1B) are further installed inside the first slots (S1) between the tooth grasping portions (73, 73b) of the different teeth adjacent to each other, ,
wherein the tooth grasping portions (73) are configured to hold the stator magnets on a the radial inside of the coil (C) within the first slots (S1) and on the radial inside of the tooth body (72) within the second slots (S2), respectively, and the stator magnet (1B) that is held on the radial inside of the coil (C) and the stator magnet (1B) that is held on the radial inside of the tooth body (72) are alternately arranged.

2. The magnetic geared rotary electric machine according to claim 1, further comprising: a claw portion (74) which is formed at a top end of the tooth grasping portion (73, 73b) so as to be protruded in the circumferential direction.

3. The magnetic geared rotary electric machine according to claim 1 or 2, wherein the tooth grasping portion (73, 73b) is formed so that a circumferential width dimension of the tooth grasping portion (73, 73b) is gradually increased from a radial outside toward a radial inside.

4. The magnetic geared rotary electric machine according to any one of claims 1 to 3, wherein the plurality of stator magnets (1B) is arranged in a Halbach magnet arrangement.

5. The magnetic geared rotary electric machine according to any one of claims 1 to 4, further comprising: a wedge (W) which is provided between the coil and the stator magnet (1B).

## Patentansprüche

1. Eine magnetisch übersetzte drehende elektrische Maschine (100), umfassend:
ein Gehäuse (4);
einen Stator, umfassend einen Stator-Kern (1A), der am Gehäuse (4) befestigt und ringförmig um eine Achse herum ausgebildet ist, eine Spule (C), die innerhalb einer Vielzahl von ersten Schlitzen (S1) des Stator-Kerns (1A) angeordnet ist, und eine Vielzahl von Stator-Magneten (1B), die innerhalb des Stator-Kerns (1A) in Abständen in Umfangsrichtung um die Achse angeordnet sind;
einen ersten Rotor (2), der eine Vielzahl von Polstücken, die radial innerhalb des Stators in Abständen in Umfangsrichtung um die Achse angeordnet sind, umfasst;
einen zweiten Rotor (3), der einen Rotor-Kern, der radial innerhalb des ersten Rotors angeordnet ist, und eine Vielzahl von Rotor-Magneten (3B), die im Rotor-Kern in Abständen in Umfangsrichtung angeordnet sind, umfasst;
wobei der Stator-Kern (1A) ein Rückjoch (71), das die Achse umgibt, und eine Vielzahl von Zähnen, die auf dem Rückjoch in Abständen in Umfangsrichtung ausgebildet sind, umfasst,
wobei jeder der Vielzahl von Zähnen (7T) einen Zahnkörper (72), der sich radial vom Rückjoch (71) nach innen erstreckt, und ein Paar Zahnfassungsabschnitte (73, 73b), die sich radial von den beiden Umfangsenden eines radial inneren Abschnitts des Zahnkörpers erstrecken, umfasst;
wobei die Spule (C) innerhalb der ersten Schlitze (S1), die zwischen den Zahnkörpern benachbarter Zähne ausgebildet werden, angeordnet ist;
wobei die Stator-Magnete (1B) innerhalb zweiter Schlitze (S2) angeordnet sind, wobei jeder zweite Schlitz (S2) zwischen dem Paar Zahnfassungsabschnitten (73, 73b) eines jeweiligen Zahns ausgebildet ist, und wobei die Stator-Magnete (1B) ferner innerhalb der ersten Schlitze (S1) zwischen den Zahnfassungsabschnitten (73, 73b) unterschiedlicher benachbarter Zähne angeordnet sind;
wobei die Zahnfassungsabschnitte (73) eingerichtet sind, um die Stator-Magnete radial innerhalb der Spule (C) in den ersten Schlitzen (S1) und radial innerhalb des Zahnkörpers (72) innerhalb der zweiten Schlitze (S2) zu halten,
beziehungsweise, wobei der Stator-Magnet (1B), der radial innerhalb der Spule (C) gehalten wird, und der Stator-Magnet (1B), der radial innerhalb des Zahnkörpers (72) gehalten wird, abwechselnd angeordnet sind.

2. Die magnetisch übersetzte drehende elektrische Maschine nach Anspruch 1, weiterhin umfassend:
einen Krallenabschnitt (74), der an einem oberen Ende des Zahnfassungsabschnitts (73, 73b) derart ausgebildet ist, dass er sich in Umfangsrichtung erstreckt.

3. Die magnetisch übersetzte drehende elektrische Maschine nach Anspruch 1 oder 2, wobei der Zahnfassungsabschnitt (73, 73b) derart ausgebildet ist, dass sich eine Breite des Zahnfassungsabschnitts (73, 73b) in Umfangsrichtung von radial außen nach radial innen graduell vergrößert.

4. Die magnetisch übersetzte drehende elektrische Maschine nach einem der Ansprüche 1 bis 3, wobei die Vielzahl von Stator-Magneten (1B) in einer Halbach-Magnet-Anordnung angeordnet ist.

5. Die magnetisch übersetzte drehende elektrische Maschine nach einem der Ansprüche 1 bis 4, weiterhin umfassend:
einen Keil (W), der zwischen der Spule und dem Stator-Magneten (1B) angeordnet ist.

## Revendications

1. Machine électrique rotative à engrenage magnétique (100) comprenant :
une enveloppe (4) ; un stator comprenant un noyau (1A) de stator fixé à l'enveloppe (4) et de forme annulaire centrée sur un axe, une bobine (C) installée à l'intérieur d'une pluralité de premières fentes (S1) du noyau (1A) de stator, et une pluralité d'aimants (1B) de stator installés à l'intérieur du noyau (1A) de stator à intervalles réguliers dans une direction circonférentielle autour de l'axe ;
un premier rotor (2) comprenant une pluralité de pièces polaires disposées radialement à l'intérieur du stator à intervalles réguliers dans la direction circonférentielle autour de l'axe ; et
un second rotor (3) comprenant un noyau de rotor situé radialement à l'intérieur du premier rotor et une pluralité d'aimants (3B) de rotor situés dans le noyau de rotor à intervalles réguliers dans la direction circonférentielle,
le noyau (1A) du stator comprenant une culasse arrière (71) entourant l'axe et une pluralité de dents formées sur la culasse arrière à intervalles réguliers dans la direction circonférentielle, chacune des dents de la pluralité de dents (7T) comprenant un corps de dent (72) se développant radialement vers l'intérieur de la culasse arrière (71) et une paire de parties de préhension (73, 73b) de dent faisant saillie radialement à partir des deux extrémités circonférentielles à une section radialement intérieure du corps de dent,
la bobine (C) étant installée à l'intérieur des premières fentes (S1) formées entre les corps de dent des dents adjacentes les unes aux autres, et
les aimants (1B) du stator étant installés à l'intérieur de secondes fentes (S2), chaque seconde fente (S2) étant formée entre ladite paire de parties de préhension (73, 73b) de dent d'une dent respective et les aimants (1B) du stator étant également installés à l'intérieur des premières fentes (S1) entre les parties de préhension (73, 73b) de dent de dents différentes adjacentes les unes aux autres,
les parties de préhension (73) de dent étant configurées pour maintenir les aimants du stator, respectivement, sur l'intérieur radial de la bobine (C), à l'intérieur des premières fentes (S1) et sur l'intérieur radial du corps de dent (72) à l'intérieur des secondes fentes (S2),
et l'aimant (1B) du stator qui est maintenu sur l'intérieur radial de la bobine (C) et l'aimant (1B) du stator qui est maintenu sur l'intérieur radial du corps de dent (72) sont disposés en alternance.

2. Machine électrique rotative à engrenage magnétique selon la revendication 1, comprenant en outre : une partie de griffe (74) formée à une extrémité supérieure de la partie de préhension (73, 73b) de dent de manière à faire saillie dans la direction circonférentielle.

3. Machine électrique rotative à engrenage magnétique selon la revendication 1 ou 2, la partie de préhension (73, 73b) de dent étant formée de telle sorte qu'une dimension de largeur circonférentielle de la partie de préhension (73, 73b) de dent augmente progressivement d'un extérieur radial vers un intérieur radial.

4. Machine électrique rotative à engrenage magnétique selon l'une quelconque des revendications 1 à 3, la pluralité d'aimants (1B) du stator étant disposée selon une disposition d'aimants de Halbach.

5. Machine électrique rotative à engrenage magnétique selon l'une quelconque des revendications 1 à 4, comprenant en outre : une cale (W) placée entre la bobine et l'aimant (1B) du stator.
